(19) Europäisches Patentamt

European Patent Office

Office européen des brevets

(11) **EP 4 730 160 A1**

(12) **EUROPEAN PATENT APPLICATION**

(43) Date of publication:
22.04.2026 Bulletin 2026/17

(21) Application number: 25206682.4

(22) Date of filing: 03.10.2025

(51) International Patent Classification (IPC):
*G06F 17/11* (2006.01)   *G06N 20/00* (2019.01)

(52) Cooperative Patent Classification (CPC):
G06F 17/11; G06N 5/01; G06N 7/01; G06N 20/00

| | |
|---|---|
| (84) Designated Contracting States:<br>AL AT BE BG CH CY CZ DE DK EE ES FI FR GB<br>GR HR HU IE IS IT LI LT LU LV MC ME MK MT NL<br>NO PL PT RO RS SE SI SK SM TR<br>Designated Extension States:<br>BA<br>Designated Validation States:<br>GE KH LA MA MD TN<br><br>(30) Priority: 17.10.2024 JP 2024181440 | (71) Applicant: FUJITSU LIMITED<br>Kawasaki-shi, Kanagawa 211-8588 (JP)<br><br>(72) Inventor: SAZAWA, Shinichi<br>Kawasaki-shi, 211-8588 (JP)<br><br>(74) Representative: Haseltine Lake Kempner LLP<br>Cheapside House<br>138 Cheapside<br>London EC2V 6BJ (GB) |

(54) **COMPUTER PROGRAM, DATA PROCESSING APPARATUS, AND DATA PROCESSING METHOD**

(57)     A processing unit determines a first solution to a surrogate problem represented by a second evaluation function obtained by adding a product of an auxiliary variable and a weight coefficient corresponding to a constraint to a first evaluation function of a mixed-integer programming problem including integer and continuous variables, using the branch and bound method with linear relaxation of the integer variable. The processing unit determines a second solution to the mixed-integer programming problem by local search using an initial solution where the integer variable in the first solution is set to an integer value while fixing the continuous variable value, determines a third solution to the mixed-integer programming problem while fixing the integer variable value included in the second solution, decreases the weight coefficient corresponding to the constraint satisfied by the third solution, and then repeats determining the first, second, and third solutions and decreasing the weight coefficient.

FIG. 1

EP 4 730 160 A1

## Description

FIELD

The embodiments discussed herein relate to a computer program, a data processing apparatus, and a data processing method.

BACKGROUND

The branch and bound method is a solution technique for obtaining an exact solution to a mixed-integer programming problem that includes integer variables and continuous variables. In the branch and bound method, a subproblem is generated by fixing some of the continuous variables in the original mixed-integer programming problem to integer values, a continuous relaxation problem of the subproblem is solved, and then a new subproblem is further generated from the subproblem. A continuous relaxation problem is a problem in which the integer variables included in an original problem or a subproblem are allowed to take continuous values. In order to use the branch and bound method more efficiently, a technique called branch cutting (or pruning) may be used.

Further, as a metaheuristic solution technique for obtaining an approximate solution to an integer programming problem within a practical computation time, a local search method is known (for example, see Shunji Umetani, "Exploiting variable associations to configure efficient local search algorithms in large-scale binary integer programs," [online], May 2017, [searched on Aug. 16, 2024], Internet <https://arxiv.org/pdf/1604.08448>).

Techniques have been proposed in which a mixed-integer programming problem is divided into a part for continuous variables and a part for discrete variables, and the discrete variable part is solved using an Ising machine (for example, see Japanese Laid-open Patent Publication No. 2020-144529 and Japanese Laid-open Patent Publication No. 2023-041506). In addition, techniques for solving a mixed-integer programming problem using a quantum computer and a classical computer have been proposed (see, for example, U.S. Patent Application Publication No. 2020/0226197 and U.S. Patent Application Publication No. 2023/0419155).

In the branch and bound method, the values of certain continuous variables are fixed according to the depth of a node representing a subproblem of a mixed-integer programming problem, and thus it is not possible to conduct a search in a wide range. Techniques (such as a simplex method, an interior point method, and others) for solving a continuous relaxation problem output a constraint-satisfying solution. However, since a good solution to a mixed-integer programming problem often exists near the boundary between a constraint-satisfying solution and a constraint-violating solution, searching only in the vicinity of the constraint-satisfying solution is not efficient. Thus, with conventional techniques, it is difficult to efficiently search for a solution to a mixed-integer programming problem.

SUMMARY

In one aspect, the present disclosure aims to efficiently search for a solution to a mixed-integer programming problem.

In one aspect, there is provided a computer program that causes a computer to perform a process including: determining a first solution to a surrogate problem that is represented by a second evaluation function, the second evaluation function being obtained by adding a product of an auxiliary variable and a weight coefficient corresponding to a constraint to a first evaluation function of a mixed-integer programming problem including an integer variable and a continuous variable, the first solution being determined by means of a branch and bound method with linear relaxation of the integer variable; determining a second solution to the mixed-integer programming problem by means of a local search using an initial solution in which the integer variable linearly relaxed in the first solution is set to an integer value while fixing a value of the continuous variable included in the initial solution; determining a third solution to the mixed-integer programming problem while fixing a value of the integer variable included in the second solution; decreasing a value of the weight coefficient corresponding to the constraint satisfied by the third solution; and repeating a process of determining the first solution, a process of determining the second solution, a process of determining the third solution, and a process of decreasing the value of the weight coefficient.

BRIEF DESCRIPTION OF DRAWINGS

FIG. 1 illustrates an example of a data processing apparatus and a data processing method according to a first embodiment;
FIG. 2 illustrates an example of a second solution search and branch cutting using the branch and bound method;

FIG. 3 is a block diagram illustrating an example of hardware of a data processing apparatus according to a second embodiment;

FIG. 4 is a block diagram illustrating an example of functions of the data processing apparatus;

FIG. 5 is a flowchart illustrating an example procedure for a process performed by the data processing apparatus;

FIG. 6 is a flowchart illustrating an example procedure for a solution search process;

FIG. 7 illustrates a specific example of an original problem and its surrogate problem;

FIG. 8 illustrates an example of adjusting $w_i$; and

FIG. 9 is a flowchart illustrating a modified example procedure for the process performed by the data processing apparatus.

DESCRIPTION OF EMBODIMENTS

Hereinafter, embodiments will be described with reference to the drawings.

(First Embodiment)

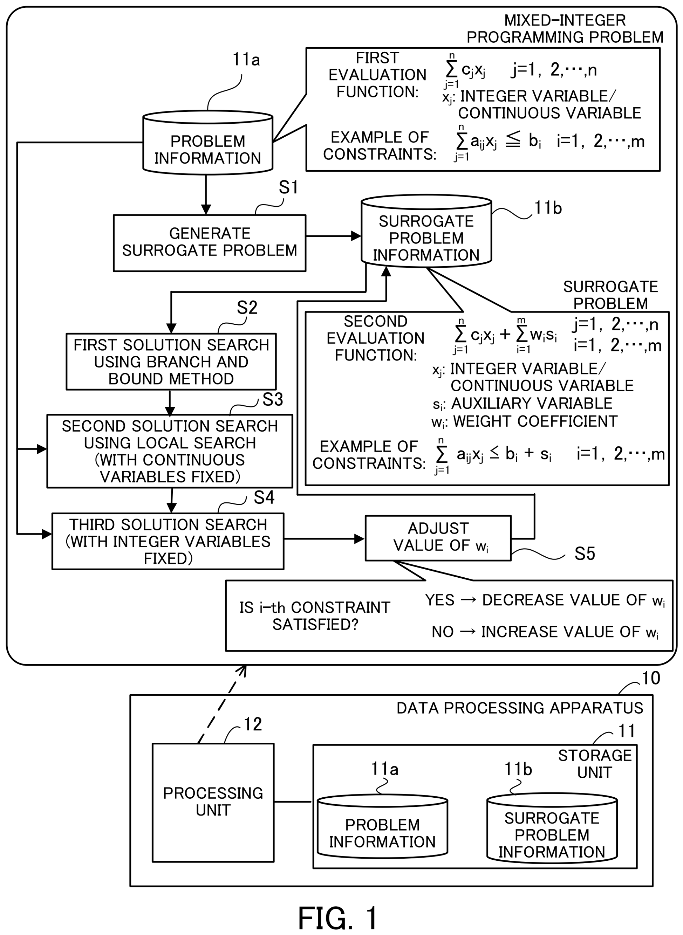

FIG. 1 illustrates an example of a data processing apparatus and a data processing method according to a first embodiment.

The data processing apparatus 10 according to the first embodiment includes a storage unit 11 and a processing unit 12.

The storage unit 11 is a volatile storage device (for example, an electronic circuit such as a dynamic random access memory (DRAM)) or a non-volatile storage device (for example, an electronic circuit such as a flash memory or a hard disk drive (HDD)). The storage unit 11 may include an electronic circuit such as a register. The storage unit 11 stores problem information 11a on a mixed-integer programming problem, and surrogate problem information 11b to be described later.

A variety of combinatorial optimization problems, such as traveling salesman problems, knapsack problems, and scheduling problems, may be formulated as mixed-integer programming problems.

A first evaluation function (also referred to as an objective function) of a mixed-integer programming problem including integer variables and continuous variables is expressed by the following Formula (1).

$$\sum_{j=1}^{n} c_j x_j \quad j = 1, 2, ..., n \qquad (1)$$

Here, $x_j$ is an integer variable or a continuous variable whose identification number is j (j = 1, 2, ..., n). $c_j$ is a coefficient representing a cost related to $x_j$.

In the case where constraints of the mixed-integer programming problem are inequality constraints, the constraints are expressed by, for example, the following Formula (2).

$$\sum_{j=1}^{n} a_{ij} x_j \leq b_i \quad i = 1, 2, ..., m \qquad (2)$$

$a_{ij}$ is a coefficient that takes the value 1 if a constraint with the identification number i (i = 1, 2, ..., m) is imposed on $x_j$, and takes the value 0 otherwise. $b_i$ is a constraint threshold for the constraint with the identification number is i.

The mixed-integer programming problem is, for example, a problem of searching for a solution that minimizes or maximizes the value of the evaluation function expressed by Formula (1) among solutions satisfying the constraints expressed by Formula (2).

The mixed-integer programming problem defined by Formulae (1) and (2) may be reduced to an unconstrained optimization problem of an evaluation function expressed by the following Formula (3).

$$\sum_{j=1}^{n} c_j x_j + \sum_{i=1}^{m} w_i max\left( 0, \sum_{j=1}^{n} a_{ij} x_j - b_i \right) \qquad (3)$$

In Formula (3), $w_i$ is a weight coefficient of 0 or greater for the constraint with the identification number i.

In the case of the mixed-integer programming problem defined by the above-described Formulae (1) and (2), the problem information 11a stored in the storage unit 11 includes $a_{ij}$, $b_i$, and $c_j$. The problem information 11a may include initial values of $x_j$ and $w_i$.

The storage unit 11 may store various types of data, such as computation conditions, which are used by the processing unit 12 to execute a data processing method described later. In addition, in the case where the processing unit 12 performs part or all of the processing of the data processing method described later by software, the storage unit 11 stores a program for performing the processing.

The processing unit 12 in FIG. 1 may be implemented by, for example, a processor, which is hardware such as a central processing unit (CPU), a graphics processing unit (GPU), or a digital signal processor (DSP). The processor may include a plurality of processor cores. The processing unit 12 may include a plurality of processors. In addition, the processing unit 12 may be implemented using an electronic circuit such as an application specific integrated circuit (ASIC) or a field programmable gate array (FPGA).

In order to search for a solution to the mixed-integer programming problem, the processing unit 12 reads the problem information 11a and the surrogate problem information 11b stored in the storage unit 11 and performs a solution search using both the branch and bound method and a local search.

FIG. 1 illustrates an example procedure for the data processing method executed by the data processing apparatus 10.

Step S1: The processing unit 12 generates a surrogate problem for the original mixed-integer programming problem, based on the problem information 11a. The surrogate problem is represented as, for example, a second evaluation function given by the following Formula (4).

$$\sum_{j=1}^{n} c_j x_j + \sum_{i=1}^{m} w_i s_i \quad j = 1, ..., n \quad i = 1, 2, ..., m \qquad (4)$$

Here, $s_i$ is an auxiliary variable corresponding to a constraint with the identification number i (i = 1, 2..., m). The auxiliary variable is a continuous variable of 0 or greater. $w_i$ is a weight coefficient of 0 or greater corresponding to the constraint with the identification number i.

As seen in Formula (4), the second evaluation function is a function obtained by adding the product of the auxiliary variable and its corresponding weight coefficient to the first evaluation function expressed by Formula (1).

In the case where the constraints of the surrogate problem are inequality constraints, the constraints are expressed by, for example, the following Formula (5).

$$\sum_{j=1}^{n} a_{ij} x_j \leq b_i + s_i \quad i = 1, 2, ..., m \qquad (5)$$

In Formula (5), $s_i$ is added to the constraint threshold bi with the identification number i. This means that the constraints of the surrogate problem are more relaxed than those of Formula (2).

Information on the generated surrogate problem (surrogate problem information 11b) is stored in the storage unit 11. Note that the surrogate problem information 11b may be generated by an external information processing apparatus. In this case, the data processing apparatus 10 acquires the surrogate problem information 11b from the external information processing apparatus and stores the surrogate problem information 11b in the storage unit 11.

Step S2: The processing unit 12 performs a first solution search using the branch and bound method. In the first solution search, the processing unit 12 determines a solution to the surrogate problem represented by the second evaluation function as described above, by means of the branch and bound method with linear relaxation of the integer variables.

The first solution search is performed in a state in which integer variables among the variables $x_j$ of the surrogate problem are linearly relaxed so as to be able to take real values in the range of 0 to 1, for example.

In the branch and bound method for the surrogate problem of the mixed-integer programming problem, a subproblem is generated by fixing some of the linearly relaxed integer variables to integer values, and a solution to the subproblem (hereinafter, referred to as a node solution) is obtained. If the values of linearly relaxed integer variables included in the node solution are not integer values, one of the integer variables that are not integer values is selected, and two subproblems are generated by fixing the value of the selected integer variable to 0 and 1. Then, a node solution is obtained for each of the subproblems. The above process is repeated until a solution in which all linearly relaxed integer variables have integer values is obtained. The operation of dividing (branching) a problem into two subproblems in this manner is referred to as a branching operation.

Here, the branching operation has the following property: the values of the second evaluation function for two node solutions obtained by branching are the same as or worse than the value of the second evaluation function for the node solution to the subproblem before the branching. Using this property, the branch and bound method omits further execution of the branching operation for subproblems in which a node solution has a value of the second evaluation function worse than the best value of the second evaluation function obtained so far (the minimum value of the second evaluation function in the case of a problem of minimizing the value of the first evaluation function). This operation of omitting the branching operation is referred to as branch cutting or pruning. When a node solution to a certain subproblem is an infeasible solution (a solution that does not satisfy the constraints as given by Formula (2)), the branching operation is also omitted.

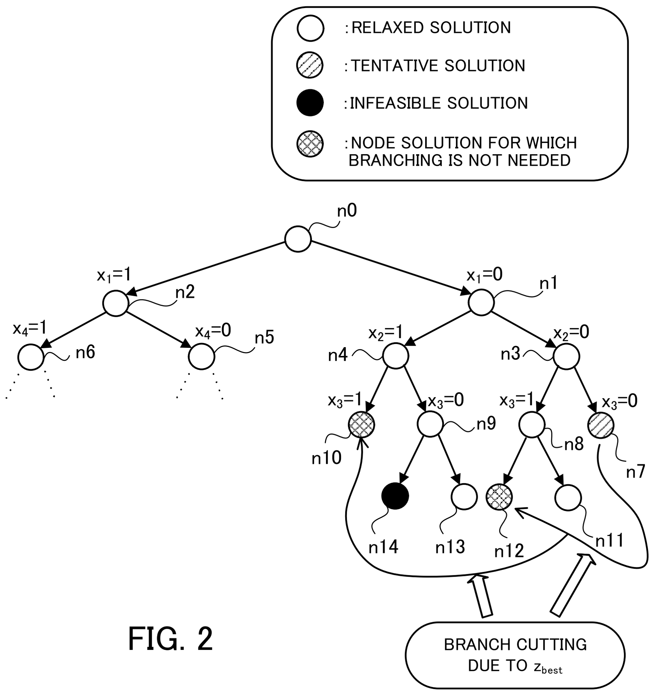

FIG. 2 illustrates an example of a second solution search and branch cutting using the branch and bound method.

First, a node solution that minimizes the value of the second evaluation function is obtained for a node n0 representing an original surrogate problem. In the case where the node solution to the node n0 contains one or more integer variables that are not integer values, one of the one or more integer variables that are not integer values is selected. In the example of FIG. 2, $x_1$ is selected. Then, two subproblems (nodes n1 and n2) are generated by fixing the value of $x_1$ to 0 and 1, and node solutions are obtained for the respective subproblems.

In the case where the node solution to the node n1 contains one or more integer variables that are not integer values, one of the one or more integer variables that are not integer values is selected. Such a node solution is called a relaxed solution. In the example of FIG. 2, $x_2$ is selected. Then, two subproblems (nodes n3 and n4) are generated by fixing the value of $x_2$ to 0 and 1, and node solutions are obtained for the respective subproblems. Similarly, in the case where the node solution to the node n2 contains one or more integer variables that are not integer values, one of the one or more integer variables that are not integer values is selected. In the example of FIG. 2, $x_4$ is selected. Then, two subproblems (nodes n5 and n6) are generated by fixing the value of $x_4$ to 0 and 1, and node solutions are obtained for the respective subproblems.

The branching operation as described above is repeated, and in the example of FIG. 2, nodes n7 to n14 and others are further generated. Note that, when a node solution (tentative solution) in which the values of all integer variables are integer values is obtained, the branching for the node is not performed. In the example of FIG. 2, the node solution to the node n7 is a tentative solution. Branching for a node having a node solution (infeasible solution) that does not satisfy the constraints is not performed. In the example of FIG. 2, the node solution to the node n14 is an infeasible solution.

In addition, in the case where a result of comparing the best value, which is a value of the second evaluation function for a tentative best solution, with the value of the second evaluation function for the node solution to a certain node indicates that the tentative best solution is better than the node solution, branching for that node is not performed. That is, branch cutting is performed. The best value is denoted by $z_{best}$ in FIG. 2. For example, in the case where it is determined that the tentative solution to the node n7 is the tentative best solution and is better than the node solutions to the nodes n10 and n12, branch cutting is performed on the nodes n10 and n12.

The process as described above is repeated. When no node remains to be branched, a node solution with $z_{best}$ is taken as a solution (tentative solution) obtained from the first solution search. Since the solution obtained here is a solution to the surrogate problem, there is a possibility that the solution does not satisfy the constraints of the original mixed-integer programming problem. In this connection, the processing unit 12 may set a node solution with $z_{best}$ obtained within a predetermined time, as a solution obtained from the first solution search.

Step S3: The processing unit 12 performs a second solution search using a local search. In the second solution search, the processing unit 12 uses an initial solution in which the linearly relaxed integer variables in the solution obtained from the first solution search are set to integer values. The processing unit 12 determines a solution to the original mixed-integer programming problem by means of the local search while fixing the values of the continuous variables in the initial solution. The evaluation function expressed by Formula (3) may be used for the local search.

The local search method is a technique in which, when an improved solution (for example, a solution having a smaller value of the first evaluation function than the current solution) is found in the vicinity of the current solution, the current solution is replaced with the improved solution. Examples of the local search method include the Markov Chain Monte Carlo (MCMC) method and a rejection-free method. The MCMC method is a technique that probabilistically determines a neighboring solution as a next transition destination, from among a plurality of neighboring solutions. The rejection-free method is a kind of MCMC method, and is a technique in which a transition is not rejected in each trial.

In step S3, in the case where linearly relaxed integer variables are not integer values in the solution to the surrogate problem obtained from the first solution search, an initial solution in which the integer variables are rounded to integer values (for example, 0 or 1) is used. By using such an initial solution and performing the local search with the values of the continuous variables fixed, the search range is expanded compared to the first solution search using the branch and bound method, which increases the likelihood of finding a good solution satisfying the integer condition.

In step S3, when a predetermined termination condition is satisfied, a solution that has the best value of the first evaluation function (the minimum value of the first evaluation function in the case of a problem of minimizing the value of the first evaluation function) is output as a solution obtained from the second solution search. For example, when a predetermined time has elapsed or when a solution with the best value has not been updated for a predetermined period, it is determined that the termination condition is satisfied.

Step S4: The processing unit 12 performs a third solution search. In the third solution search, the processing unit 12 determines a solution to the original mixed-integer programming problem while fixing the values of the integer variables included in the solution obtained from the second solution search. For example, in the third solution search, an exact solution method is used to search for a solution that minimizes the value of the first evaluation function by changing the values of the continuous variables while fixing the values of the integer variables. Note that this solution may be an infeasible solution that does not satisfy a constraint.

Step S5: The processing unit 12 adjusts the value of the weight coefficient ($w_i$ in Formula (4)). The processing unit 12 decreases the value of the weight coefficient corresponding to each constraint satisfied by the solution obtained for the mixed-integer programming problem through the third solution search. For example, in the case where the i-th constraint (identification number = i) is satisfied, the processing unit 12 decreases the value of $w_i$. This reduces the degree of relaxation for the i-th constraint.

The processing unit 12 increases the value of the weight coefficient corresponding to each constraint that is not satisfied by the solution obtained for the mixed-integer programming problem through the third solution search. For example, in the case where the i-th constraint is not satisfied, the processing unit 12 increases the value of $w_i$. This increases the degree of relaxation for the i-th constraint.

The value of $w_i$ is adjusted by, for example, multiplying the original value of $w_i$ by a predetermined coefficient value for adjustment or by dividing the original value of $w_i$ by the predetermined coefficient value. An example of adjusting the value of $w_i$ using the predetermined coefficient value will be described in a second embodiment.

After the execution of step S5, steps S2 to S5 are repeated until a predetermined search termination condition is satisfied. If the value of $w_i$ is decreased in step S5, it becomes less likely that the i-th constraint will be satisfied by the solution obtained in the subsequent steps S2 and S3. If the value of $w_i$ is increased in step S5, it becomes more likely that the i-th constraint will be satisfied by the solution obtained in the subsequent steps S2 and S3.

When the predetermined search termination condition is satisfied, the data processing apparatus 10 ends the processing. At this time, the data processing apparatus 10 may output, as the result of solving the mixed-integer programming problem, a solution that satisfies all the constraints and yields the best value of the first evaluation function among the solutions obtained in steps S3 and S4 so far. The solution search result may include the best value of the first evaluation function.

As described above, the data processing apparatus 10 determines a first solution to a surrogate problem represented by a second evaluation function that is obtained by adding the products of auxiliary variables and weight coefficients corresponding to constraints, respectively, to the first evaluation function of the mixed-integer programming problem, by means of the branch and bound method with linear relaxation of the integer variables. In addition, the data processing apparatus 10 determines a second solution to the mixed-integer programming problem by means of the local search using an initial solution in which the linearly relaxed integer variables in the first solution are set to integer values while fixing the values of the continuous variables included in the initial solution. In addition, the data processing apparatus 10 determines a third solution to the mixed-integer programming problem while fixing the values of the integer variables included in the second solution. Then, the data processing apparatus 10 decreases the values of the weight coefficients corresponding to constraints satisfied by the third solution. The data processing apparatus 10 repeats the process of determining the first solution, the process of determining the second solution, the process of determining the third solution, and the process of decreasing the values of the weight coefficients.

A good solution to a mixed-integer programming problem is often at the boundary between a constraint-satisfying solution and a constraint-violating solution (see, for example, the following literature (particularly, "3.4 Strategic Oscillation" on p. 707)).

Hideki Hashimoto and Koji Nonobe, "Introduction Tabu Search Method", Operations Research, December 2013, Vol. 58, pp. 703-707

Therefore, it is not efficient to perform a search only in the vicinity of a constraint-satisfying solution. As described above, by decreasing the values of the weight coefficients corresponding to the constraints satisfied by a solution to the mixed-integer programming problem, it becomes possible to efficiently obtain a good solution in the vicinity of a constraint-violating solution, compared to the case of simply searching for a constraint-satisfying solution.

In addition, by using the second solution search based on a local search, which is an approximate solution method, together with the first and third solution searches that are exact solution methods, it becomes possible to perform a search in a wide range, to obtain a variety of solutions, and to improve the solving performance.

As described above, the data processing apparatus 10 of the first embodiment is able to efficiently search for a solution to a mixed-integer programming problem.

In addition, in solving a variety of problems in modern society, which are convertible into mixed-integer programming problems, the data processing apparatus 10 is able to efficiently search for solutions, and thus is expected to be useful as a means for efficiently obtaining good solutions while reducing the computational cost and time.

Note that the above example describes a case where the constraints of the mixed-integer programming problem are inequality constraints. However, applicable constraints are not limited to inequality constraints. For example, the present embodiment is also applicable to a search for a solution to a mixed-integer programming problem in which the constraints are equality constraints.

The equality constraints of a mixed-integer programming problem may be expressed by the following Formula (6), for example.

$$\sum_{j=1}^{n} a_{ij}x_j = b_i \quad i = 1, 2, ..., m \tag{6}$$

The equality constraints of a surrogate problem may be expressed by, for example, the following Formula (7).

$$\sum_{j=1}^{n} a_{ij}x_j \le b_i + s_i \tag{7}$$

$$\sum_{j=1}^{n} a_{ij}x_j \ge b_i - s_i$$

In the equality constraints, $s_i$ is added to or subtracted from the constraint threshold $b_i$ with the identification number i, as in Formula (7). Accordingly, the constraints of the surrogate problem are relaxed compared to the case of Formula (6).

(Second Embodiment)

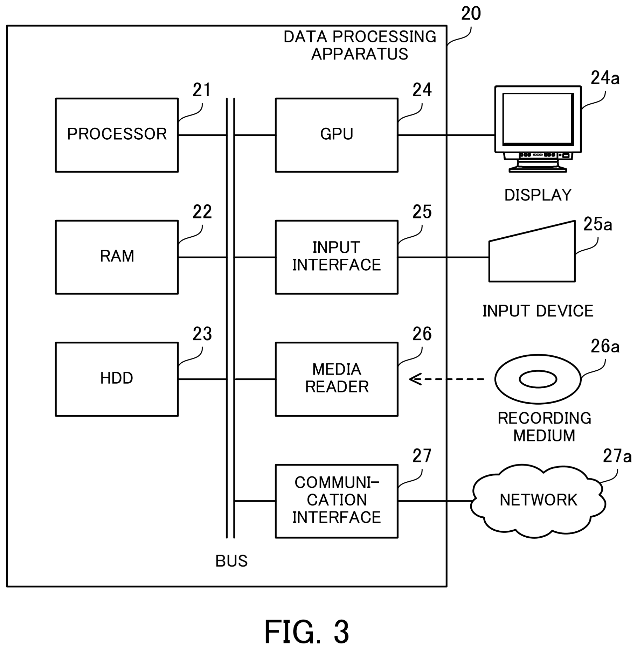

FIG. 3 is a block diagram illustrating an example of hardware of a data processing apparatus according to a second embodiment.

A data processing apparatus 20 is, for example, a computer, and includes a processor 21, a RAM 22, an HDD 23, a GPU 24, an input interface 25, a media reader 26, and a communication interface 27. These units are connected to a bus.

The processor 21 is a processor such as a GPU or a CPU including an arithmetic circuit that executes program instructions. The processor 21 loads at least a part of a program or data from the HDD 23 into the RAM 22 and executes the program. The processor 21 may include a plurality of processor cores. The data processing apparatus 20 may include a plurality of processors. Different processes among a plurality of processes performed by the data processing apparatus 20 may be performed by different processors. A set of a plurality of processors (multiprocessor) may be referred to as a "processor". The processor may be referred to as processor circuitry.

The RAM 22 is a volatile semiconductor memory that temporarily stores programs to be executed by the processor 21 and data to be used by the processor 21 for computation. The data processing apparatus 20 may include a memory of a type other than the RAM 22, or may include a plurality of memories.

The HDD 23 is a non-volatile storage device that stores software programs such as an operating system (OS), middleware, and application software, and data. The programs include, for example, a program that causes the data processing apparatus 20 to perform a process of searching for a solution to a mixed-integer programming problem using a local search and the branch and bound method. The data processing apparatus 20 may include another type of storage device such as a flash memory or a solid state drive (SSD), or may include a plurality of non-volatile storage devices.

The GPU 24 outputs images to a display 24a connected to the data processing apparatus 20 in accordance with instructions from the processor 21. As the display 24a, a cathode ray tube (CRT) display, a liquid crystal display (LCD), a plasma display panel (PDP), an organic electro-luminescence (OEL) display, or the like may be used.

The input interface 25 acquires input signals from an input device 25a connected to the data processing apparatus 20 and outputs the input signals to the processor 21. As the input device 25a, a pointing device such as a mouse, a touch panel, a touch pad, or a track ball, a keyboard, a remote controller, a button switch, or the like may be used. A plurality of types of input devices may be connected to the data processing apparatus 20.

The media reader 26 is a reading device that reads programs and data recorded on a recording medium 26a. As the recording medium 26a, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 26 copies a program or data read from the recording medium 26a to another recording medium such as the RAM 22 or the HDD 23. The read program is executed by, for example, the processor 21. The recording medium 26a may be a portable recording medium, and may be used to distribute programs and data. The recording medium 26a and the HDD 23 may be referred to as computer-readable recording media.

The communication interface 27 is connected to a network 27a and communicates with other information processing apparatuses via the network 27a. The communication interface 27 may be a wired communication interface connected to a communication device such as a switch via a cable, or may be a wireless communication interface connected to a base station via a wireless link.

Next, the functions of the data processing apparatus 20 will be described.

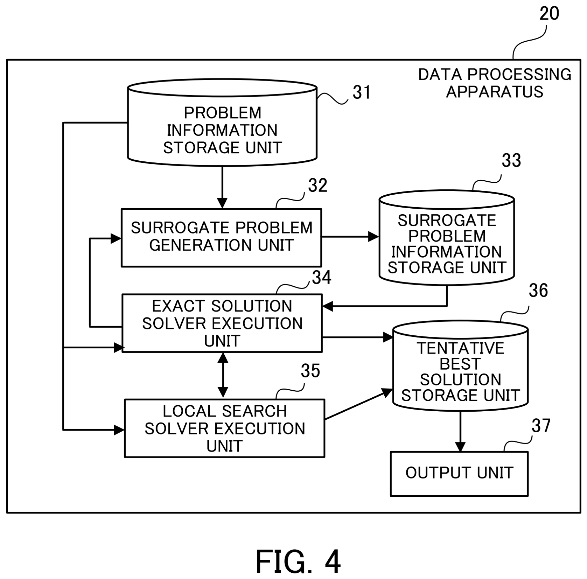

FIG. 4 is a block diagram illustrating an example of the functions of the data processing apparatus.

The data processing apparatus 20 includes a problem information storage unit 31, a surrogate problem generation unit 32, a surrogate problem information storage unit 33, an exact solution solver execution unit 34, a local search solver execution unit 35, a tentative best solution storage unit 36, and an output unit 37.

With these units, the same functions as those of the storage unit 11 and the processing unit 12 illustrated in FIG. 1 are implemented.

The problem information storage unit 31, the surrogate problem information storage unit 33, and the tentative best solution storage unit 36 are implemented using a storage area secured in the RAM 22 or the HDD 23. The surrogate problem generation unit 32, the exact solution solver execution unit 34, the local search solver execution unit 35, and the output unit 37 may be implemented using, for example, program modules executed by the processor 21.

The surrogate problem generation unit 32, the exact solution solver execution unit 34, the local search solver execution unit 35, and the output unit 37 may be implemented by one processor core or a plurality of different processor cores in the processor 21. Further, the local search solver execution unit 35 may be implemented by an Ising machine. The Ising machine may be implemented by an electronic circuit such as an FPGA.

The problem information storage unit 31 stores problem information on a mixed-integer programming problem. In the case where the mixed-integer programming problem to be solved is defined by Formula (1) and Formula (2) (or Formula (6)), the problem information includes $a_{ij}$, $b_i$, and $c_j$. The problem information may be input by an user operating the input device 25a and stored in the problem information storage unit 31, or may be input via the recording medium 26a or the network 27a and stored in the problem information storage unit 31.

The surrogate problem generation unit 32 generates a surrogate problem for the original mixed-integer programming problem, based on the problem information stored in the problem information storage unit 31. The surrogate problem is represented by the second evaluation function expressed by the above-described Formula (4).

In addition, the surrogate problem generation unit 32 adjusts the value of the weight coefficient ($w_i$ in Formula (4)) corresponding to a constraint according to whether the solution obtained for the mixed-integer programming problem by the exact solution solver execution unit 34 satisfies the constraint. In the following, a coefficient $\alpha$ is used to adjust the value of $w_i$. The surrogate problem generation unit 32 multiplies $w_i$ by $\alpha$ in the case of increasing $w_i$, and divides $w_i$ by $\alpha$ in the case of decreasing $w_i$. For example, $\alpha$ is set to a predetermined value such as 1.5. The surrogate problem generation unit 32 may acquire the value of $\alpha$ from the outside of the data processing apparatus 20.

The surrogate problem information storage unit 33 stores surrogate problem information that is information on the surrogate problem generated by the surrogate problem generation unit 32. The surrogate problem information includes, for example, the values of $a_{ij}$, $b_i$, and $c_j$ included in Formulae (4) to (7), the initial values of $w_i$ and $s_i$, and others. The surrogate problem information may include an initial value of $x_j$.

The exact solution solver execution unit 34 determines a solution to the surrogate problem represented by the second evaluation function, by means of the branch and bound method, which is an exact solution method, with linear relaxation of the integer variables. The exact solution solver execution unit 34 also determines a solution to the mixed-integer programming problem while fixing the values of the integer variables included in the solution obtained by the local search solver execution unit 35.

The local search solver execution unit 35 computes a solution to the original mixed-integer programming problem by means of a solution search using an initial solution in which the linearly relaxed integer variables in the solution to the surrogate problem obtained by the exact solution solver execution unit 34 is set to integer values while fixing the values of the continuous variables.

The tentative best solution storage unit 36 stores a tentative best solution that yields the best value of the first evaluation function and that satisfies all constraints among the solutions obtained for the mixed-integer programming problem by the exact solution solver execution unit 34 or the local search solver execution unit 35.

The output unit 37 outputs a solution search result for the mixed-integer programming problem when a search termination condition is satisfied. For example, the output unit 37 outputs the tentative best solution stored in the tentative best solution storage unit 36, as the solution search result. For example, the output unit 37 may output and display the solution search result on the display 24a, may transmit the solution search result to another information processing apparatus via the network 27a, or may store the solution search result in an external storage device.

Next, the processing procedure of the data processing method executed by the data processing apparatus 20 according to the second embodiment will be described.

(Processing Procedure)

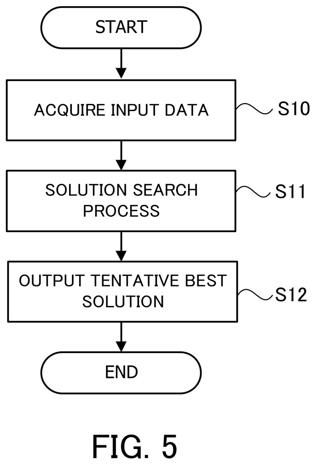

FIG. 5 is a flowchart illustrating an example procedure for a process performed by the data processing apparatus.

Step S10: The data processing apparatus 20 acquires input data. The input data includes problem information on a mixed-integer programming problem to be solved, the initial value of $w_i$, and the value of the coefficient $\alpha$ to be used to adjust the value of $w_i$. The data processing apparatus 20 may acquire the input data input by the user operating the input device 25a, or may acquire the input data input via the recording medium 26a or the network 27a. The problem information is stored in the problem information storage unit 31.

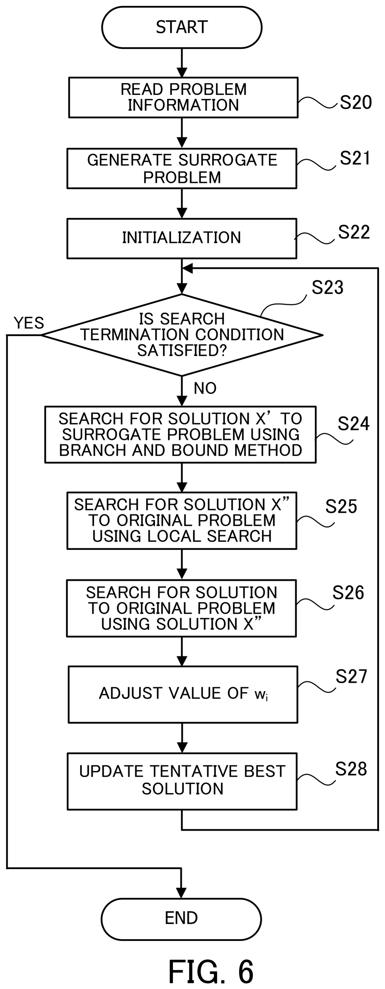

Step S11: The data processing apparatus 20 performs a solution search process using both the branch and bound method and a local search. An example procedure for the solution search process will be described later (see FIG. 6).

Step S12: When a search termination condition is satisfied, the data processing apparatus 20 outputs the tentative best solution stored in the tentative best solution storage unit 36, and ends the process.

FIG. 6 is a flowchart illustrating an example procedure for the solution search process.

Step S20: The surrogate problem generation unit 32 reads the problem information on the mixed-integer programming problem from the problem information storage unit 31.

Step S21: The surrogate problem generation unit 32 generates a surrogate problem for the original mixed-integer programming problem (hereinafter, abbreviated as an original problem) based on the problem information. Specifically, the second evaluation function represented by Formula (4) is generated by adding the products of the auxiliary variables and the weight coefficients corresponding to the constraints, respectively, to the first evaluation function of the original problem represented by Formula (1).

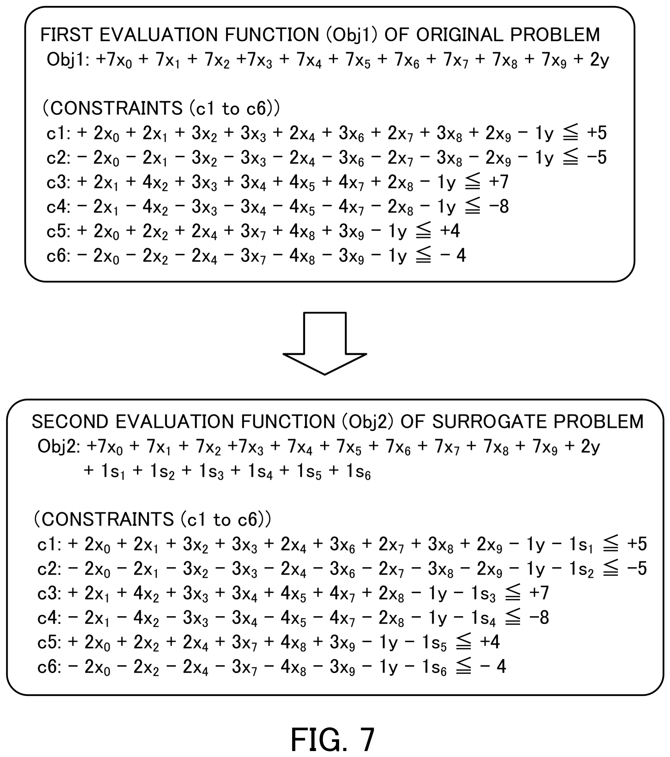

FIG. 7 illustrates a specific example of an original problem and its surrogate problem.

FIG. 7 illustrates an example of a first evaluation function (Obj1) and constraints (c1 to c6) with respect to an original problem whose optimal solution is known. The first evaluation function (Obj1) has ten binary variables (integer variables) and one continuous variable ($\geq 0$). That is, this example is that the first evaluation function of Formula (1) includes eleven $x_j$, ten of which are integer variables and one of which is a continuous variable. In FIG. 7, the ten integer variables are denoted by $x_0$ to $x_9$, and the one continuous variable is denoted by y. In addition, in the example of FIG. 7, the six constraints c1 to c6 are different inequality constraints.

The optimal solution to this original problem (the solution that minimizes the value of Obj1 and satisfies the six constraints) is one in which $x_2 = 1$ and $y = 4$ with all other integer variables being 0.

FIG. 7 also illustrates an example of a surrogate problem generated for the above-described original problem. In the example of FIG. 7, a second evaluation function (Obj2) is illustrated, in which the products of the auxiliary variables ($s_1$ to $s_6$) and the weight coefficients (all 1 in the example of FIG. 7) corresponding respectively to the six constraints (c1 to c6) are added to the first evaluation function (Obj1).

In the example of FIG. 7, each of the six inequality constraints of the surrogate problem is obtained by adding $-1s_i$ to the left-hand side of the corresponding inequality constraint of the original problem. These correspond to values obtained by adding $s_i$ to the constraint thresholds (+5, -5, +7, -8, +4, and -4 on the right-hand side) of the six inequality constraints of the original problem. Therefore, in the case where $s_i > 0$, the six inequality constraints of the surrogate problem are more relaxed than those of the original problem.

Step S22: The data processing apparatus 20 performs initialization. For example, $w_i$ is set to the initial value of $w_i$ acquired in step S10. The tentative best solution stored in the tentative best solution storage unit 36 is initialized to "None" (indicating that there is no tentative best solution).

Step S23: The data processing apparatus 20 determines whether a search termination condition is satisfied. For example, the data processing apparatus 20 determines that the search termination condition is satisfied when the elapsed time has reached a predetermined time. Alternatively, the data processing apparatus 20 may determine that the search termination condition is satisfied when the tentative best solution has not been updated for a predetermined period.

If it is determined that the search termination condition is satisfied, the data processing apparatus 20 ends the solution search process, and executes step S12 as described above (to output the tentative best solution). If it is determined that the search termination condition is not satisfied, step S24 is executed.

Step S24: In the data processing apparatus 20, the exact solution solver execution unit 34 searches for a solution X' to the surrogate problem by means of the branch and bound method. In the case of the solution search for the surrogate problem as illustrated in FIG. 7, the branch and bound method is executed in which the integer variables $x_0$ to $x_9$ are linearly relaxed to take any real values in the range of 0 to 1.

In the surrogate problem illustrated in FIG. 7, the solution X' has an optimal solution in which y = 5 and $s_4$ = 2 with all other variables being 0. Since $s_4 > 0$, the constraint with the identification number 4 is violated.

Step S25: In the data processing apparatus 20, the local search solver execution unit 35 searches for a solution X" to the original mixed-integer programming problem by means of the local search. In step S25, an initial solution in which the linearly relaxed integer variables in the solution X' obtained in step S24 are set to integer values is used. In addition, the local search is performed with the values of the continuous variables fixed.

In the case where $x_0$ to $x_9$ included in the solution X' to the surrogate problem as illustrated in FIG. 7 do not have integer values, they are set to integer values. For example, the value of a linearly relaxed integer variable is rounded to 1 if it is greater than or equal to 0.5, and to 0 if it is less than 0.5. The local search is performed with the value of the continuous variable y fixed. In the case where the solution X' to the surrogate problem as illustrated in FIG. 7 is used, y = 5 is fixed.

Step S26: In the data processing apparatus 20, the exact solution solver execution unit 34 searches for a solution to the original problem using the solution X". In step S26, the solution search using an exact solution method is performed while fixing the values of the integer variables included in the solution X" obtained in step S25. In the case where the obtained solution is a feasible solution (that satisfies all constraints), the exact solution solver execution unit 34 updates X" to the solution.

In searching for the solution to the original problem illustrated in FIG. 7, the value of the continuous variable y included in the solution X" is set to variable while the values of $x_0$ to $x_9$ therein are fixed, and then a solution that minimizes the value of the first evaluation function is searched for.

Step S27: In the data processing apparatus 20, the surrogate problem generation unit 32 adjusts the value of $w_i$ corresponding to a constraint according to whether the solution obtained in step S26 satisfies the constraint. If the solution obtained in step S26 satisfies the constraint with the identification number i, the surrogate problem generation unit 32 divides $w_i$ by $\alpha$. That is, the surrogate problem generation unit 32 updates $w_i$ to $w_i/\alpha$. If the solution obtained in step S26 does not satisfy the constraint with the identification number i, the surrogate problem generation unit 32 multiplies $w_i$ by $\alpha$. That is, the surrogate problem generation unit 32 updates $w_i$ to $w_i \times \alpha$.

For example, it is assumed that the solution obtained in step S26 for the original problem illustrated in FIG. 7 violates the constraint with the identification number 4 (inequality constraint c4 in FIG. 7) and satisfies the other constraints. In this case, for the surrogate problem, the value of $w_4$ is multiplied by $\alpha$, and the values of $w_1$ to $w_3$ and $w_5$ to $w_6$ are multiplied by $1/\alpha$.

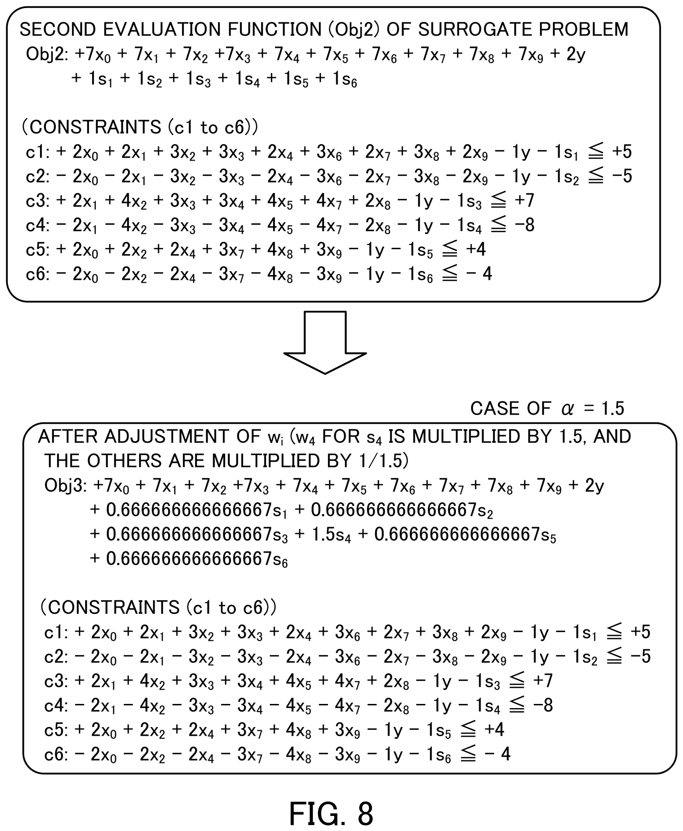

FIG. 8 illustrates an example of adjusting $w_i$. In the adjustment example of FIG. 8, $\alpha$ is set to 1.5.

Assume the case where the initial values of $w_1$ to $w_6$ are 1. If the value of w4 is multiplied by 1.5 and the values of $w_1$ to $w_3$ and $w_5$ to $w_6$ are multiplied by 1/1.5, then the value of w4 is 1.5, and the values of $w_1$ to $w_3$ and $w_5$ to $w_6$ are 0.6666666666667. As a result, a second evaluation function (Obj3) as illustrated in FIG. 8 is obtained.

Step S28: In the case where the solution obtained in step S26 is a feasible solution and the tentative best solution is "None" or the value of the first evaluation function obtained for the solution X" < the value of the first evaluation function obtained for the tentative best solution, the data processing apparatus 20 updates the tentative best solution to X". If the solution obtained in step S26 is not a feasible solution or the value of the first evaluation function obtained for the solution X" $\geq$ the value of the first evaluation function obtained for the tentative best solution, the tentative best solution is not updated.

After the execution of step S28, step S23 and subsequent steps are repeated.

In the case where steps S24 to S26 are executed again after the values of $w_1$ to $w_6$ are adjusted as illustrated in FIG. 8, a solution in which $x_2$ = 1 and y = 4 with all the other integer variables being 0 and which satisfies all the constraints, that is, an optimum solution is obtained as the solution X" to the original problem.

The order of steps illustrated in FIG. 6 is merely an example, and may be changed as appropriate. For example, the order of steps S27 and S28 may be switched.

As described above, the data processing apparatus 20 determines a solution X' to a surrogate problem, which is represented by the second evaluation function obtained by adding the products of the auxiliary variables ($s_i$) and the weight coefficients ($w_i$) corresponding to constraints, respectively, to the first evaluation function of an original problem, by means of the branch and bound method with linear relaxation of the integer variables. Then, the data processing apparatus 20 determines a solution X" to the original problem by means of a local search using an initial solution in which the linearly relaxed integer variables in the solution X' are set to integer values while fixing the values of the continuous variables included in the initial solution. Further, the data processing apparatus 20 determines a solution to the original problem while fixing the values of the integer variables included in the solution X". Then, the data processing apparatus 20 decreases the value of $w_i$ corresponding to each constraint satisfied by the solution to the original problem, by multiplying $w_i$ by $1/\alpha$. The data processing apparatus 20 repeats the process of determining the solution X', the process of determining the solution X", the process of determining the solution to the original problem, and the process of decreasing the value of $w_i$.

By doing so, a good solution in the vicinity of a constraint-violating solution is obtained efficiently compared to the case of simply searching for a constraint-satisfying solution, for the same reason as in the data processing apparatus 10 of the first embodiment. In addition, the execution of both the solution search using a local search, which is an approximate solution method, and the solution search using the branch and bound method, which is an exact solution method, enables a search in a wide range.

As described above, the data processing apparatus 20 of the second embodiment is able to efficiently search for a solution to a mixed-integer programming problem.

(Modifications)

In the above example, $\alpha$, which is an adjustment coefficient for the value of $w_i$, is a fixed value. Alternatively, $\alpha$ may be a variable value. For example, the value of the adjustment coefficient for the value of $w_i$ may be changed a plurality of times as described below.

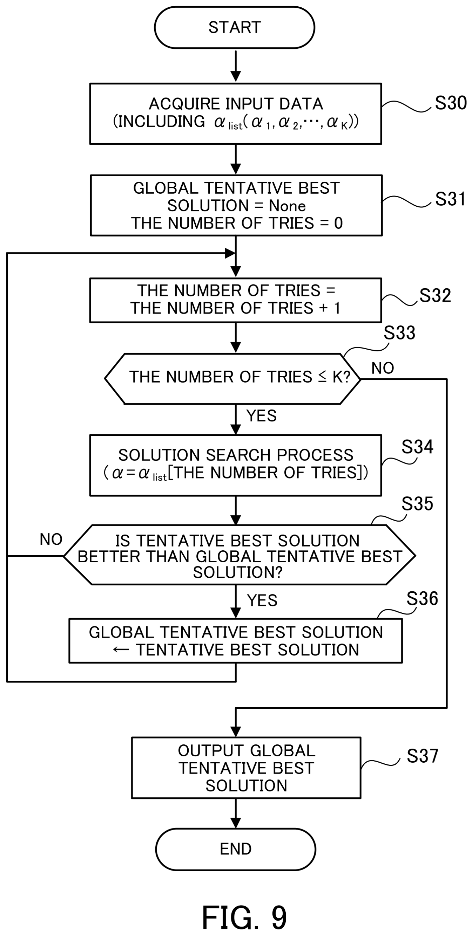

FIG. 9 is a flowchart illustrating a modified example procedure for the process performed by the data processing apparatus.

Step S30: The data processing apparatus 20 acquires input data. The input data includes a list $\alpha_{list}$ including values of K coefficients $\alpha_1$, $\alpha_2$, ..., and $\alpha_K$ used to adjust the value of $w_i$, in addition to problem information on a mixed-integer programming problem to be solved and the initial value of $w_i$. The values of $\alpha_1$ to $\alpha_K$ are different from each other. For example, $\alpha_1 < \alpha_2 < ... < \alpha_K$.

The data processing apparatus 20 may acquire the input data including the list $\alpha_{list}$ input by the user operating the input device 25a, or may acquire the input data input via the recording medium 26a or the network 27a.

Step S31: The data processing apparatus 20 initializes a global tentative best solution to "None". The global tentative best solution is the best solution among the tentative best solutions obtained using the K coefficients $\alpha_1$ to $\alpha_K$. The global tentative best solution may be stored in the tentative best solution storage unit 36. Further, the data processing apparatus 20 initializes the number of tries to 0.

Step S32: The data processing apparatus 20 sets the number of tries to the number of tries + 1.

Step S33: The data processing apparatus 20 determines whether the number of tries is less than or equal to K. If the number of tries is less than or equal to K, the data processing apparatus 20 executes step S34. If the number of tries is not less than or equal to K, the data processing apparatus 20 executes step S37.

Step S34: The data processing apparatus 20 performs a solution search process as illustrated in FIG. 6. In adjusting the value of $w_i$ in step S27 of FIG. 6, $\alpha$ is set to the value at the position indicated by the number of tries in the list $\alpha_{list}$.

Step S35: The data processing apparatus 20 determines whether the tentative best solution obtained in step S34 is better than the global tentative best solution. In the case where the original problem is a problem of minimizing the value of the first evaluation function, the data processing apparatus 20 determines that the tentative best solution is better than the global tentative best solution, if the value of the first evaluation function obtained for the tentative best solution is smaller than the value of the first evaluation function obtained for the global tentative best solution.

If it is determined that the tentative best solution is better than the global tentative best solution, the data processing apparatus 20 executes step S36. If it is determined that the tentative best solution is not better than the global tentative best solution, the data processing apparatus 20 repeats the process from step S32.

Step S36: The data processing apparatus 20 updates the global tentative best solution using the tentative best solution. After the execution of step S36, the data processing apparatus 20 repeats the process from step S32.

Step S37: The data processing apparatus 20 outputs the global tentative best solution and ends the process.

The above-described process increases the likelihood of obtaining a better solution (global tentative best solution), compared to the case of setting $\alpha$ to a fixed value.

Note that the above-described processing content may be implemented by causing the data processing apparatus 20 to execute a program.

The program may be recorded on a computer-readable recording medium (for example, the recording medium 26a). As the recording medium, for example, a magnetic disk, an optical disc, a magneto-optical disk, a semiconductor memory, or the like may be used. Magnetic disks include an FD and an HDD. Optical discs include a CD, a CD-recordable (CD-R), CD-rewritable (CD-RW), a DVD, a DVD-R, and a DVD-RW. The program may be recorded on a portable recording medium and distributed. In this case, the program may be copied from the portable recording medium to another recording medium (for example, the HDD 23) and executed.

One aspect of the computer program, the data processing apparatus, and the data processing method according to the present disclosure has been described above with reference to the embodiments. However, these embodiments are merely examples, and the present disclosure is not limited to the above description.

In one aspect, it is possible to efficiently search for a solution to a mixed-integer programming problem.

**Claims**

1. A computer program that causes a computer to perform a process comprising:

   determining a first solution to a surrogate problem that is represented by a second evaluation function, the second evaluation function being obtained by adding a product of an auxiliary variable and a weight coefficient corresponding to a constraint to a first evaluation function of a mixed-integer programming problem including an integer variable and a continuous variable, the first solution being determined by means of a branch and bound method with linear relaxation of the integer variable;

   determining a second solution to the mixed-integer programming problem by means of a local search using an initial solution in which the integer variable linearly relaxed in the first solution is set to an integer value while fixing a value of the continuous variable included in the initial solution;

   determining a third solution to the mixed-integer programming problem while fixing a value of the integer variable included in the second solution;

   decreasing a value of the weight coefficient corresponding to the constraint satisfied by the third solution; and repeating a process of determining the first solution, a process of determining the second solution, a process of determining the third solution, and a process of decreasing the value of the weight coefficient.

2. The computer program according to claim 1, wherein the auxiliary variable is a variable that relaxes the constraint by being added to or subtracted from a constraint threshold of the constraint.

3. The computer program according to claim 1 or claim 2, wherein the repeating includes repeating the process of determining the first solution, the process of determining the second solution, the process of determining the third solution, and the process of decreasing the value of the weight coefficient until a predetermined termination condition is satisfied.

4. The computer program according to any preceding claim, wherein the process includes increasing the value of the weight coefficient corresponding to the constraint, upon determining that the third solution does not satisfy the constraint.

5. The computer program according to any preceding claim, wherein the decreasing includes decreasing the value of the weight coefficient by dividing an original value of the weight coefficient by a predetermined coefficient value.

6. The computer program according to any preceding claim, wherein the process includes increasing the value of the weight coefficient by multiplying an original value of the weight coefficient by a predetermined coefficient value, upon determining that the third solution does not satisfy the constraint.

7. The computer program according to claim 5 or 6, wherein the process further includes outputting a best solution satisfying all constraints including the constraint among third solutions obtained by repeating the process of determining the first solution, the process of determining the second solution, the process of determining the third solution, and the process of decreasing the value of the weight coefficient until a predetermined termination condition is satisfied while changing the predetermined coefficient value a plurality of times.

8. A data processing apparatus comprising:

   processing means (12) configured to:

   determine a first solution to a surrogate problem that is represented by a second evaluation function, the second evaluation function being obtained by adding a product of an auxiliary variable and a weight coefficient corresponding to a constraint to a first evaluation function of a mixed-integer programming problem including an integer variable and a continuous variable, the first solution being determined by means of a branch and bound method with linear relaxation of the integer variable;

   determine a second solution to the mixed-integer programming problem by means of a local search using an initial solution in which the integer variable linearly relaxed in the first solution is set to an integer value while fixing a value of the continuous variable included in the initial solution;

   determine a third solution to the mixed-integer programming problem while fixing a value of the integer variable included in the second solution;

   decrease a value of the weight coefficient corresponding to the constraint satisfied by the third solution; and

repeat a process of determining the first solution, a process of determining the second solution, a process of determining the third solution, and a process of decreasing the value of the weight coefficient; and

storage means (11) configured to store problem information (11a, 11b) on the mixed-integer programming problem and the surrogate problem.

9. A data processing method executed by a computer, the data processing method comprising:

determining a first solution to a surrogate problem that is represented by a second evaluation function, the second evaluation function being obtained by adding a product of an auxiliary variable and a weight coefficient corresponding to a constraint to a first evaluation function of a mixed-integer programming problem including an integer variable and a continuous variable, the first solution being determined by means of a branch and bound method with linear relaxation of the integer variable;
determining a second solution to the mixed-integer programming problem by means of a local search using an initial solution in which the integer variable linearly relaxed in the first solution is set to an integer value while fixing a value of the continuous variable included in the initial solution;
determining a third solution to the mixed-integer programming problem while fixing a value of the integer variable included in the second solution;
decreasing a value of the weight coefficient corresponding to the constraint satisfied by the third solution; and
repeating a process of determining the first solution, a process of determining the second solution, a process of determining the third solution, and a process of decreasing the value of the weight coefficient.

MIXED−INTEGER
PROGRAMMING PROBLEM

11a

PROBLEM
INFORMATION

FIRST
EVALUATION
FUNCTION:
$\displaystyle\sum_{j=1}^{n} c_j x_j \quad j=1, 2, \cdots, n$
$x_j$: INTEGER VARIABLE/
CONTINUOUS VARIABLE

EXAMPLE OF
CONSTRAINTS:
$\displaystyle\sum_{j=1}^{n} a_{ij} x_j \leqq b_i \quad i=1, 2, \cdots, m$

S1

GENERATE
SURROGATE PROBLEM

SURROGATE
PROBLEM
INFORMATION

11b

SURROGATE
PROBLEM

S2

FIRST SOLUTION SEARCH
USING BRANCH AND
BOUND METHOD

SECOND
EVALUATION
FUNCTION:
$\displaystyle\sum_{j=1}^{n} c_j x_j + \sum_{i=1}^{m} w_i s_i \quad \begin{matrix} j=1, 2, \cdots, n \\ i=1, 2, \cdots, m \end{matrix}$

$x_j$: INTEGER VARIABLE/
CONTINUOUS VARIABLE
$s_i$: AUXILIARY VARIABLE
$w_i$: WEIGHT COEFFICIENT

S3

SECOND SOLUTION SEARCH
USING LOCAL SEARCH
(WITH CONTINUOUS
VARIABLES FIXED)

EXAMPLE OF
CONSTRAINTS:
$\displaystyle\sum_{j=1}^{n} a_{ij} x_j \leq b_i + s_i \quad i=1, 2, \cdots, m$

S4

THIRD SOLUTION SEARCH
(WITH INTEGER VARIABLES
FIXED)

ADJUST
VALUE OF $w_i$

S5

IS $i$-th CONSTRAINT
SATISFIED?

YES → DECREASE VALUE OF $w_i$

NO → INCREASE VALUE OF $w_i$

10

DATA PROCESSING APPARATUS

12

PROCESSING
UNIT

11

STORAGE
UNIT

11a

PROBLEM
INFORMATION

11b

SURROGATE
PROBLEM
INFORMATION

FIG. 1

FIG. 2

DATA PROCESSING
APPARATUS — 20

PROCESSOR — 21

GPU — 24

DISPLAY — 24a

RAM — 22

INPUT
INTERFACE — 25

INPUT DEVICE — 25a

HDD — 23

MEDIA
READER — 26

RECORDING
MEDIUM — 26a

COMMUNI-
CATION
INTERFACE — 27

NETWORK — 27a

BUS

FIG. 3

FIG. 4

START

ACQUIRE INPUT DATA ⌇ S10

SOLUTION SEARCH PROCESS ⌇ S11

OUTPUT TENTATIVE BEST SOLUTION ⌇ S12

END

FIG. 5

START

READ PROBLEM INFORMATION ~S20

GENERATE SURROGATE PROBLEM ~S21

INITIALIZATION ~S22

S23
IS SEARCH TERMINATION CONDITION SATISFIED?

YES

NO

SEARCH FOR SOLUTION X' TO SURROGATE PROBLEM USING BRANCH AND BOUND METHOD ~S24

SEARCH FOR SOLUTION X" TO ORIGINAL PROBLEM USING LOCAL SEARCH ~S25

SEARCH FOR SOLUTION TO ORIGINAL PROBLEM USING SOLUTION X" ~S26

ADJUST VALUE OF $w_i$ ~S27

UPDATE TENTATIVE BEST SOLUTION ~S28

END

FIG. 6

FIRST EVALUATION FUNCTION (Obj1) OF ORIGINAL PROBLEM

Obj1: $+7x_0 + 7x_1 + 7x_2 + 7x_3 + 7x_4 + 7x_5 + 7x_6 + 7x_7 + 7x_8 + 7x_9 + 2y$

(CONSTRAINTS (c1 to c6))

c1: $+ 2x_0 + 2x_1 + 3x_2 + 3x_3 + 2x_4 + 3x_6 + 2x_7 + 3x_8 + 2x_9 - 1y \leqq +5$

c2: $- 2x_0 - 2x_1 - 3x_2 - 3x_3 - 2x_4 - 3x_6 - 2x_7 - 3x_8 - 2x_9 - 1y \leqq -5$

c3: $+ 2x_1 + 4x_2 + 3x_3 + 3x_4 + 4x_5 + 4x_7 + 2x_8 - 1y \leqq +7$

c4: $- 2x_1 - 4x_2 - 3x_3 - 3x_4 - 4x_5 - 4x_7 - 2x_8 - 1y \leqq -8$

c5: $+ 2x_0 + 2x_2 + 2x_4 + 3x_7 + 4x_8 + 3x_9 - 1y \leqq +4$

c6: $- 2x_0 - 2x_2 - 2x_4 - 3x_7 - 4x_8 - 3x_9 - 1y \leqq - 4$

SECOND EVALUATION FUNCTION (Obj2) OF SURROGATE PROBLEM

Obj2: $+7x_0 + 7x_1 + 7x_2 + 7x_3 + 7x_4 + 7x_5 + 7x_6 + 7x_7 + 7x_8 + 7x_9 + 2y$
$+ 1s_1 + 1s_2 + 1s_3 + 1s_4 + 1s_5 + 1s_6$

(CONSTRAINTS (c1 to c6))

c1: $+ 2x_0 + 2x_1 + 3x_2 + 3x_3 + 2x_4 + 3x_6 + 2x_7 + 3x_8 + 2x_9 - 1y - 1s_1 \leqq +5$

c2: $- 2x_0 - 2x_1 - 3x_2 - 3x_3 - 2x_4 - 3x_6 - 2x_7 - 3x_8 - 2x_9 - 1y - 1s_2 \leqq -5$

c3: $+ 2x_1 + 4x_2 + 3x_3 + 3x_4 + 4x_5 + 4x_7 + 2x_8 - 1y - 1s_3 \leqq +7$

c4: $- 2x_1 - 4x_2 - 3x_3 - 3x_4 - 4x_5 - 4x_7 - 2x_8 - 1y - 1s_4 \leqq -8$

c5: $+ 2x_0 + 2x_2 + 2x_4 + 3x_7 + 4x_8 + 3x_9 - 1y - 1s_5 \leqq +4$

c6: $- 2x_0 - 2x_2 - 2x_4 - 3x_7 - 4x_8 - 3x_9 - 1y - 1s_6 \leqq - 4$

## FIG. 7

SECOND EVALUATION FUNCTION (Obj2) OF SURROGATE PROBLEM

Obj2: $+7x_0 + 7x_1 + 7x_2 + 7x_3 + 7x_4 + 7x_5 + 7x_6 + 7x_7 + 7x_8 + 7x_9 + 2y$
$+ 1s_1 + 1s_2 + 1s_3 + 1s_4 + 1s_5 + 1s_6$

(CONSTRAINTS (c1 to c6))

c1: $+ 2x_0 + 2x_1 + 3x_2 + 3x_3 + 2x_4 + 3x_6 + 2x_7 + 3x_8 + 2x_9 - 1y - 1s_1 \leqq +5$
c2: $- 2x_0 - 2x_1 - 3x_2 - 3x_3 - 2x_4 - 3x_6 - 2x_7 - 3x_8 - 2x_9 - 1y - 1s_2 \leqq -5$
c3: $+ 2x_1 + 4x_2 + 3x_3 + 3x_4 + 4x_5 + 4x_7 + 2x_8 - 1y - 1s_3 \leqq +7$
c4: $- 2x_1 - 4x_2 - 3x_3 - 3x_4 - 4x_5 - 4x_7 - 2x_8 - 1y - 1s_4 \leqq -8$
c5: $+ 2x_0 + 2x_2 + 2x_4 + 3x_7 + 4x_8 + 3x_9 - 1y - 1s_5 \leqq +4$
c6: $- 2x_0 - 2x_2 - 2x_4 - 3x_7 - 4x_8 - 3x_9 - 1y - 1s_6 \leqq - 4$

CASE OF $\alpha = 1.5$

AFTER ADJUSTMENT OF $w_i$ ($w_4$ FOR $s_4$ IS MULTIPLIED BY 1.5, AND THE OTHERS ARE MULTIPLIED BY 1/1.5)

Obj3: $+7x_0 + 7x_1 + 7x_2 + 7x_3 + 7x_4 + 7x_5 + 7x_6 + 7x_7 + 7x_8 + 7x_9 + 2y$
$+ 0.6666666666666667s_1 + 0.6666666666666667s_2$
$+ 0.6666666666666667s_3 + 1.5s_4 + 0.6666666666666667s_5$
$+ 0.6666666666666667s_6$

(CONSTRAINTS (c1 to c6))

c1: $+ 2x_0 + 2x_1 + 3x_2 + 3x_3 + 2x_4 + 3x_6 + 2x_7 + 3x_8 + 2x_9 - 1y - 1s_1 \leqq +5$
c2: $- 2x_0 - 2x_1 - 3x_2 - 3x_3 - 2x_4 - 3x_6 - 2x_7 - 3x_8 - 2x_9 - 1y - 1s_2 \leqq -5$
c3: $+ 2x_1 + 4x_2 + 3x_3 + 3x_4 + 4x_5 + 4x_7 + 2x_8 - 1y - 1s_3 \leqq +7$
c4: $- 2x_1 - 4x_2 - 3x_3 - 3x_4 - 4x_5 - 4x_7 - 2x_8 - 1y - 1s_4 \leqq -8$
c5: $+ 2x_0 + 2x_2 + 2x_4 + 3x_7 + 4x_8 + 3x_9 - 1y - 1s_5 \leqq +4$
c6: $- 2x_0 - 2x_2 - 2x_4 - 3x_7 - 4x_8 - 3x_9 - 1y - 1s_6 \leqq - 4$

## FIG. 8

START

ACQUIRE INPUT DATA
(INCLUDING $\alpha_{list}(\alpha_1, \alpha_2, \cdots, \alpha_K)$) —— S30

GLOBAL TENTATIVE BEST
SOLUTION = None
THE NUMBER OF TRIES = 0 —— S31

THE NUMBER OF TRIES =
THE NUMBER OF TRIES + 1 —— S32

S33
THE NUMBER OF TRIES ≤ K? —— NO

YES

SOLUTION SEARCH PROCESS
($\alpha = \alpha_{list}$[THE NUMBER OF TRIES]) —— S34

S35
NO — IS TENTATIVE BEST SOLUTION
BETTER THAN GLOBAL TENTATIVE BEST
SOLUTION?

YES —— S36

GLOBAL TENTATIVE BEST SOLUTION
← TENTATIVE BEST SOLUTION

OUTPUT GLOBAL
TENTATIVE BEST
SOLUTION —— S37

END

FIG. 9

# EP 4 730 160 A1

## EUROPEAN SEARCH REPORT

**Application Number**

EP 25 20 6682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 061 569 B2 (IBM [US]) 28 August 2018 (2018-08-28) * column 5 - column 6; figures 2-4 * ----- | 1-9 | INV. G06F17/11 G06N20/00 |
| A | Mulvey John M. ET AL: "A NEW SCENARIO DECOMPOSITION METHOD FOR LARGE-SCALE STOCHASTIC OPTIMIZATION", , 30 July 1995 (1995-07-30), XP093377189, Retrieved from the Internet: URL:https://doi.org/10.1287/opre.43.3.477 [retrieved on 2026-03-13] * section 3 * ----- | 1-9 | |

**TECHNICAL FIELDS SEARCHED (IPC)**

G06F
G06E
G06N

The present search report has been drawn up for all claims

| Place of search | Date of completion of the search | Examiner |
|---|---|---|
| Berlin | 13 March 2026 | Virnik, Elena |

## ANNEX TO THE EUROPEAN SEARCH REPORT
## ON EUROPEAN PATENT APPLICATION NO.

EP 25 20 6682

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | Publication date | Patent family member(s) | Publication date |
|---|---|---|---|
| US 10061569 B2 | 28-08-2018 | US 2017031664 A1<br>US 2017161230 A1<br>US 2018322093 A1 | 02-02-2017<br>08-06-2017<br>08-11-2018 |

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020144529 A
- JP 2023041506 A
- US 20200226197
- US 20230419155

**Non-patent literature cited in the description**

- **SHUNJI UMETANI**. *Exploiting variable associations to configure efficient local search algorithms in large-scale binary integer programs*, May 2017, https://arxiv.org/pdf/1604.08448
- **HIDEKI HASHIMOTO** ; **KOJI NONOBE**. Introduction Tabu Search Method. *Operations Research*, December 2013, vol. 58, 703-707